Europäisches Patentamt

(19) European Patent Office

Office européen des brevets

(11) Numéro de publication: **0 098 220 B1**

(12) **FASCICULE DE BREVET EUROPEEN**

(51) Int. Cl.⁴: **C 04 B 41/90,** C 04 B 41/51, C 03 C 17/36

(45) Date de publication du fascicule du brevet: 04.12.85

(21) Numéro de dépôt: **83401313.8**

(22) Date de dépôt: **24.06.83**

(54) Procédé de revêtement d'or ou de platine sur des objets, en particulier des objets en céramique ou en verre, et objets ainsi obtenus.

(30) Priorité: **25.06.82 FR 8211159**

(43) Date de publication de la demande: **11.01.84 Bulletin 84/2**

(45) Mention de la délivrance du brevet: **04.12.85 Bulletin 85/49**

(84) Etats contractants désignés: **BE CH DE FR GB IT LI LU**

(56) Documents cités:
**DE - A - 2 529 250**
**DE - B - 712 854**
**DE - B - 1 085 304**
**DE - C - 109 496**
**FR - A - 1 297 613**
**GB - A - 1 372 719**

(73) Titulaire: **EMAUX DE BRIARE, 1, Boulevard Loreau, F-45250 Briare (FR)**

(72) Inventeur: **Mourlon, Serge, Rue des Vergers, F-45250 Briare (FR)**

(74) Mandataire: **Martin, Jean-Jacques et al, Cabinet REGIMBEAU 26, Avenue Kléber, F-75116 Paris (FR)**

BUNDESDRUCKEREI BERLIN

## Description

La présente invention concerne un procédé de revêtement d'or ou de platine sur des objets, en particulier des objets en céramique ou en verre, vitrifiés dans la masse ou émaillés, ainsi que les objets ainsi obtenus.

Il est courant de revêtir d'or un objet en céramique ou en verre, notamment dans l'industrie de la porcelaine et de la flaconnerie de luxe; le dépôt d'or sur l'objet s'effectue alors au moyen d'une solution d'or contenant jusqu'à 15% en poids d'or pour produire une dorure d'aspect brillant et jusqu'à 32% pour produire une dorure d'aspect mat.

Cette solution d'or est déposée de différentes manières telles que l'application au pinceau, au pistolet, par écran de soie, par tampon ou par décalcomanie. L'objet décoré subit ensuite une cuisson à des températures variant de 500°C à 850°C environ suivant la nature del'objet ou de sa surface.

Les revêtements d'or ou de platine brillant ainsi obtenus montrent notoirement une faible résistance à l'abrasion, en particulier aux produits ménagers, et risquent de s'effacer rapidement. Quant aux revêtements d'or mat, s'ils ont une meilleure tenue à l'abrasion, ils nécessitent un polissage pour rendre l'éclat souhaité.

Il a été préconisé, pour assurer la protection de l'or, de déposer au pistolet, à la brosse ou au rouleau, des couches très broyées à base d'un émail boracique très fusible afin d'obtenir une couche uniforme et transparente. Toutefois, un tel procédé ne permet pas de conserver tout l'éclat du revêtement d'or seul.

Il convient aussi enfin, de mentionner que, pour obtenir un revêtement d'or brillant résistant à l'abrasion sur de la mosaïque ou des carreaux de céramiques, il est connu de coller à chaud une feuille d'or entre deux feuilles de verre, mais ce procédé est onéreux et difficile à mettre en œuvre.

L'invention a notamment pour but d'obvier aux inconvénients des procédés connus de protection contre l'altération et l'abrasion de ces revêtements de métaux précieux, par un procédé simple produisant simultanément un relief d'aspect sablé.

La présente invention concerne plus particulièrement un procédé de revêtement d'or ou de platine sur des objets, en particulier des objets en céramique ou en verre, vitrifiés dans la masse ou émaillés, consistant à appliquer un revêtement d'or ou de platine sur une surface d'un objet, à sécher ce revêtement, à soumettre l'objet à une première cuisson à des températures comprises entre environ 500°C et 800°C selon la nature de l'objet, à étaler une couche d'accrochage sur la surface revêtue de l'objet, à effectuer sur cette surface un émaillage à sec en déposant sur la couche d'accrochage une couche d'émail, et à faire subir à l'objet une deuxième cuisson à des températures inférieures aux températures de première cuisson.

Conformément à l'invention, la couche d'émail est constituée de grains d'émail de granulométrie comprise entre 5 et 1000 µm de manière à obtenir, après la deuxième cuisson, un revêtement d'or ou de platine protégé présentant un relief sablé brillant.

Le revêtement résultant d'or ou de platine offre un aspect granité ou sablé accentuant le brillant et l'on constate qu'il ne s'altère pas et qu'il résiste à l'abrasion.

L'apport, par exemple par tamis, de la couche de grains d'émail, sur la couche d'accrochage évite toute détérioration du revêtement d'or ou de platine, de même que les températures modérées de la deuxième cuisson permettent de conserver à l'objet une tenue satisfaisante.

La couche d'émail a donc un double rôle, celui de protection de l'or ou du platine, et celui de lui conférer un aspect original à relief sablé du fait de la granulométrie choisie. Cette granulométrie est de préférence comprise entre 10 et 315 µm pour produire un effet optimal.

Selon une autre caractéristique de l'invention, la couche d'émail présente un indice de réfraction supérieur à 1,6, ce qui permet d'accentuer le brillant du relief sablé obtenu.

Bien que l'on puisse utiliser tout émail présentant un tel indice de réfraction élevé, il s'est avéré que, dans la pratique, l'émail préféré est constitué essentiellement d'un silicate de plomb simple ou complexe.

Il est important pour obtenir l'aspect granité recherché que la deuxième cuisson soit effectuée dans des conditions réglées de température et de durée. Cette deuxième cuisson est effectuée avantageusement à des températures inférieures de 40° à 150°C aux températures de première cuisson, et pendant une durée comprise entre 40 minutes et 4 heures.

Il est particulièrement avantageux que la température de deuxième cuisson soit légèrement supérieure, par exemple supérieure de 10° à 20°C, à la température de fusion de la couche d'émail.

L'invention prévoit également de déposer la couche d'émail sur une partie de la surface revêtue d'or ou de platine pour obtenir une surface revêtue offrant partiellement un relief sablé brillant.

Si l'objet n'est pas à revêtir entièrement, on peut utiliser suivant sa forme soit des masques, par exemple autocollants, soit des caches plats ou en forme, de manière à ne déposer la couche d'accrochage que sur les parties où l'on souhaite protéger l'or ou le platine.

On peut ainsi obtenir si l'objet a été au préalable entièrement revêtue d'une couche d'or ou de platine, des parties d'or ou de platine brillant lisse et des parties protégées d'aspect sablé.

Il faut également signaler que le procédé de l'invention offre l'avantage de permettre d'appliquer un revêtement d'or de faible épaisseur et que ce revêtement n'a pas besoin d'être poli avant dépôt de la couche d'accrochage.

D'autres caractéristiques et avantages de l'invention ressortiront de la description ci-dessous, relative à un mode de réalisation non limitatif, ainsi que des dessins annexés, sur lesquels:

La figure 1 représente une vue en plan d'un élément de mosaïque muni de manière classique d'un revêtement d'or lisse;

La figure 2 représente cet élément en coupe;

La figure 3 montre un élément de mosaïque muni d'un revêtement d'or à l'aspect sablé brillant par le procédé conforme à l'invention;

Les figures 4, 5 et 6 montrent différentes étapes du procédé de fabrication de l'élément de mosaïque de la figure 3; et

Les figures 7 et 8 sont des graphiques montrant la répartition granulométrique des grains d'émail utilisés respectivement dans les exemples 4 et 6 de la description.

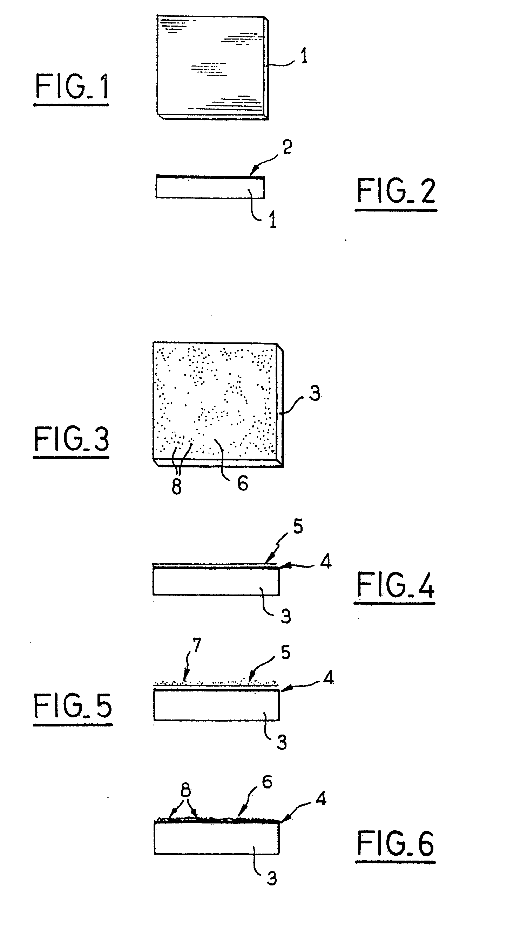

L'élément de mosaïque 1 illustré par les figures 1 et 2 est recouvert d'une couche d'or brillant 2 par une enduction classique sans protection et ce revêtement s'altère rapidement par abrasion, en particulier sous l'effet des produits ménagers.

L'élément de mosaïque 3 fabriqué selon l'invention et représenté sur les figures 3 à 6 offre un aspect granité ou sablé brillant et résiste à l'abrasion.

L'élément 3 est revêtu d'une couche d'or 4 sur laquelle on apporte (figure 4) une couche d'accrochage 5, puis (figure 5) une couche 7 de particules de verre broyé d'indice de réfraction et de granulométrie définis. Après cuisson (figure 6), l'élément 3 présente sur la couche d'or 4 une couche vitreuse 6 dont le granité 8 procure l'aspect sablé brillant recherché.

Le procédé selon l'invention qui est applicable plus particulièrement aux substrats en verre, carreaux ou éléments mosaïques de verre ou de céramique vitrifiés dans la masse ou émaillés, est par exemple mis en œuvre de la manière suivante.

Des éléments mosaïque à émail plombeux et/ou boracique sont assemblés sur un support de cuisson en métal réfractaire ou en céramique. On dépose l'or, au pinceau par exemple, sur la face libre des éléments mosaïque; le support portant l'assemblage mosaïque revêtu d'or est placé dans une étuve de séchage pendant une heure à 100° C puis, après séchage, est introduit dans un four de cuisson constitué par un four statique programmé ou par un four à passage. Dans ce dernier cas, la cuisson s'effectue en des temps variant de 40 minutes à 4 heures suivant les caractéristiques du four et notamment la densité de charge et l'évacuation des fumées.

L'épaisseur du revêtement d'or peut, par exemple, être compris entre 0,10 et 0,15 μm.

La température de cuisson de l'or, dépendant de la qualité d'or employée, elle-même fonction de la nature de l'objet et des caractéristiques de la surface revêtue, est comprise entre 400° C pour le verre et 800 à 850° C pour le verre et la porcelaine.

A la sortie du four, on étale, par pulvérisation ou enduction sur l'assemblage mosaïque revêtu d'or, une couche d'accrochage de préférence formée par une couche de diluant gras ou médium.

Puis on tamise sur cette couche d'accrochage une couche de verre au plomb broyé à indice de réfraction supérieur à 1,6 et de granulométrie comprise entre 5 et 1000 μm, de préférence entre 10 et 315 μm, la couche de verre étant maintenue sur les éléments mosaïque grâce à la couche d'accrochage.

L'assemblage mosaïque est introduit dans un four dynamique à durée de cycle à 40 minutes à températures inférieures à celles précédemment atteintes lors de la première cuisson, ceci permettant de conserver aux éléments leur tenue. Les températures de deuxième cuisson sont inférieures d'environ 40° C à 150° C aux températures de première cuisson; par exemple, dans le cas d'une dorure sur verre la température de deuxième cuisson peut être de l'ordre de 460° C et dans le cas d'une dorure sur céramique ou porcelaine, elle peut être de l'ordre de 650° C à 760° C.

A la sortie du four on constate que le revêtement vitreux obtenu confère à la mosaïque un aspect brillant en même temps qu'une durabilité satisfaisante et une excellente tenue à l'abrasion des poudres ménagères.

Il va de soi que sans sortir du cadre de l'invention on peut apporter des modifications au procédé décrit à titre d'exemple. L'application du métal précieux tel que l'or, le platine, ou leurs alliages, peut s'effectuer par tout moyen connu, pinceau, tampon, écran de soie, etc.

L'invention est encore illustrée par les exemples non limitatifs suivants, dans lesquels les pourcentages sont exprimés en poids.

### Exemple 1

On applique au rouleau à peinture sur un carreau de céramique préalablement doré une couche d'une solution à 1% de carboxy-méthyl-cellulose.

### Exemple 2

Sur une plaque de verre ou de céramique préalablement dorée, on applique par sérigraphie (sauf en certains endroits qui peuvent être des lettres ou une adresse, ou un quelconque dessin par exemple) une couche de térébentine de Venise.

L'émail ultérieur ne sera retenu qu'aux seuls endroits revêtus de cette couche d'accrochage.

### Exemple 3

Sur un flacon de verre préalablement doré on étale au pinceau sur les parties à émailler une couche d'une solution à 1% de Polyglycol (viscosité 4 Pa · s (4000 centipoises)).

On projette sur la surface ainsi revêtue, des grains d'un émail transparent à fort indice de réfraction et de granulométrie comprise entre 5 et 1000 μm, puis l'on fait subir à l'objet une deuxième cuisson dont la température est inférieure de 40° à 150°C à celle de la première cuisson de l'or, jusqu'à début de fusion des grains d'émail.

Le revêtement résultant d'or ou de platine offre un aspect granité ou sablé accentuant le brillant et l'on constate qu'il ne s'altère pas aux acides, bases et produits ménagers et qu'il résiste aux abrasions courantes à la rayure.

Les résultats diffèrent selon les classes granulométriques utilisées.

### Exemple 4

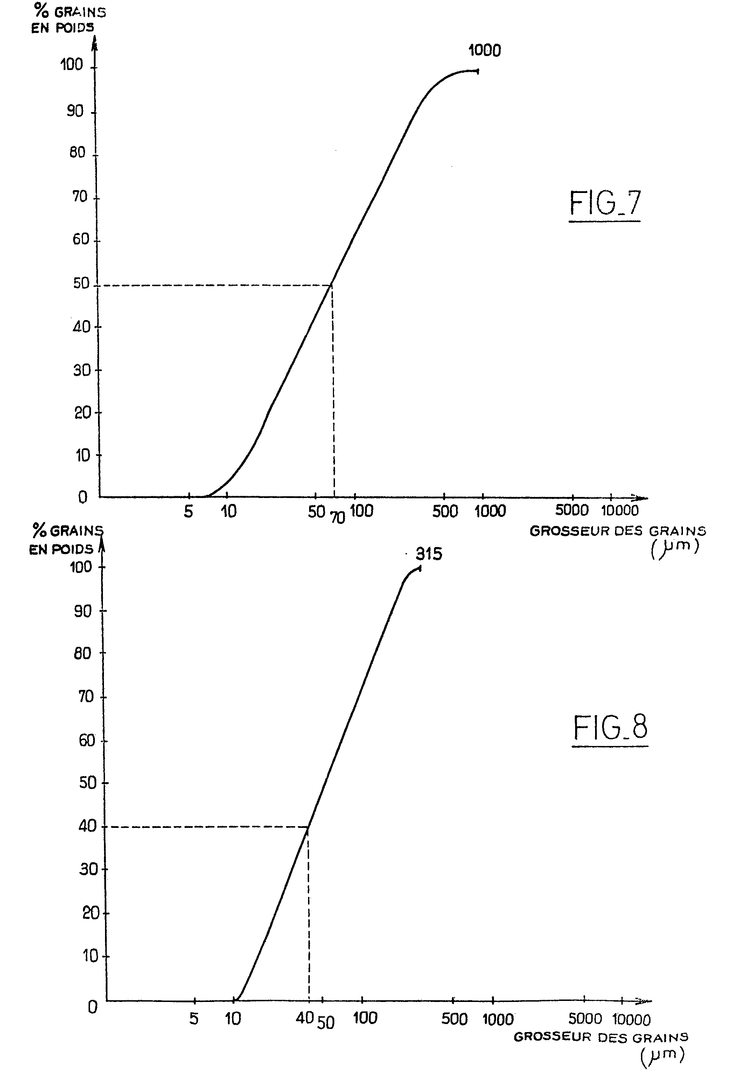

On utilise des grains de 5 à 1000 μm sélectionnés par tamisage et élimination des fines dans un courant d'eau. La Figure 7 est un graphique de la répartition granulométrique des grains utilisés, qui exprime, sur une échelle semi-logarithmique, le pourcentage de grains en poids en fonction de la grosseur des grains en μm. Ce graphique exprime plus particulièrement le pourcentage en poids de grains inférieurs à une grosseur donnée. Ainsi, 50% des grains sont inférieurs à 70 μm. Ce graphique montre la répartition granulométrique suivante:

    0,5% de grains de 700 à 1000 μm
    20% de grains de 220 à 1000 μm
    30% de grains de 70 à 220 μm
    30% de grains de 22 à 70 μm
    15% de grains de 1 à 22 μm
    moins de 5% de grains de 5 à 11 μm

A l'aide d'un rouleau répartiteur, on réalise un rideau de sable sous lequel on fait passer les objets à décorer revêtus de leur couche d'accrochage.

Du fait de la large répartition granulométrique, on obtient un relief très irrégulier avec d'une part des grains très marqués compris dans les granulométries de 300 à 1000 μm, d'autre part de petites plages planes constituées par les grains inférieurs à 20 μm. La surface de l'or est dans ce cas complètement recouverte.

On obtient après cuisson un relief irrégulier avec des plaques d'éclat variables en fonction de l'émail.

### Exemple 5

On sélectionne en lavant par tamisage des grains compris entre 40 et 63 μm et on fait couler les grains sur un tamis vibrant ayant une ouverture de maille de 80 μm, qui les disperse sur les objets à décorer.

On obtient après cuisson un très fin granité régulier.

### Exemple 6

On utilise une répartition granulométrique comprenant 15% de grains entre 160 et 315 μm, 25% entre 80 et 160 μm, 20% entre 40 et 80 μm et 40% des grains entre 10 et 40 μm. La répartition granulométrique est illustrée par le graphique de la Figure 8 établi dans les mêmes conditions que celui de la Figure 7. Ce graphique montre par exemple que 40% en poids des grains sont d'une grosseur inférieure à 40 μm.

La distribution sur les objets à décorer par exemple des carreaux ou des mosaïques de verre ou de céramique peut se faire par fluidisation et projection.

L'absence de grains inférieurs à 10 μm permet d'avoir le maximum d'éclat car les grains plus fins peuvent créer une opacification. Par contre, la plage granulométrique est suffisamment large pour avoir une certaine irrégularité de surface qui masque bien les rayures éventuelles.

La distribution sur les objets à décorer, par exemple des carreaux ou des mosaïques, peut se faire par fluidisation et projection.

La couche d'émail granulé à donc un double rôle, celui de protection de l'or ou du platine, et celui de lui conférer un aspect original à relief sablé de brillant accentué du fait de la granulométrie et du fort indice de réfraction choisis; la granulométrie est de préférence comprise entre 10 et 315 μm pour produire un effet optimal et l'indice de réfraction est de préférence supérieur à 1,6.

Il est bien connu que les verres courants à plus fort indice de réfraction sont ceux riches en plomb ou en baryum ou les deux.

Le point caractéristique de la glaçure granulée de revêtement est qu'elle doit contenir du plomb pour donner la meilleure brillance. Les glaçures dans la plage de sensibilité spectrale de l'oeil, entre 40 et 70 nm (400 et 700 Angströms), ont un indice de réfraction supérieur à 1,60.

Les gammes suivantes pour la composition des frittes sont particulièrement efficaces dans les applications conformes à la présente invention, les parties indiquées étant en poids:

| | |
|---|---|
| $SiO_2$ | 10 à 50% |
| $PbO$ | 50 à 90% |
| $Al_2O_3$ | 0 à 1% |
| $Na_2O$ | 0 à 5% |
| $K_2O$ | 0 à 5% |

Ce type de formule est particulièrement indiqué avec un produit huileux (Exemple 2) mais on peut aussi utiliser un colloïde dans l'eau (Exemple 1) ou des esters d'acides gras (Exemple 3).

### Exemple 7

Fritte I

| | |
|---|---|
| $SiO_2$ | 50% |
| $PbO$ | 50% |

Indice de réfraction nD: 1,62; température de fusion: 950° C.

### Exemple 8

Fritte II

SiO₂ 35%
PbO 65%

Indice de réfraction nD: 1,73; température de fusion: 795° C.

### Exemple 9

Fritte III

SiO₂ 20%
PbO 80%

Indice de réfraction: 1,94; température de fusion: 650° C.

En fait commercialement les frittes sont rarement parfaitement pures, on y trouve souvent un peu d'alumine (moins de 2%) un peu de Na₂O (moins de 0,5%).

### Exemple 10

Fritte n° 10

SiO₂ 33,98%
Al₂O₂ 0,38%
Na₂O 0,10%
PbO 65,54%

Parfois, sans modification notable de l'indice de réfraction, on y trouve un peu plus d'alcalins:

### Exemple 11

Fritte n° 13

SiO₂ 31,70%
Al₂O₃ 0,14%
Na₂O 2,95%
K₂O 2,32%
PbO 62,89%

Indice de réfraction nD: 1,74; température de fusion: 760° C.

Ces exemples de glacures conformes à l'invention sont données uniquement à titre d'illustration.

La présente invention concerne donc la protection d'or brillant déposé sur verre ou céramique par un émail de granulométrie, de température, de fusion et d'indice de réfraction déterminés en vue d'assurer le meilleur éclat de l'or et la meilleure protection vis à vis des agressions chimiques et physiques notamment d'usure, dans les emplois courants des objets ainsi revêtus.

La composition d'or ou de platine liquide est appliquée sur la base de verre ou de céramique émaillé par tout procédé de décoration manuel ou automatique habituellement utilisé. L'article est ensuite séché à 100° et cuit à des températures de cuisson comprises entre 500 et 850° C en fonction de la nature du support à la seule condition que celui-ci soit non poreux.

Après cette première cuisson on dépose sur tout ou partie de l'objet en fonction de l'effet esthétique récherché, la couche d'accrochage constituée de préférence par un médium huileux ce qui permet un temps de travail plus long, mais on peut aussi utiliser des solutions aqueuses épaisses. Cette application peut à nouveau se faire selon tout procédé de décoration manuel ou automatique habituellement utilisé.

On dépose ensuite par l'un des procédés décrits aux exemples 4, 5 et 6 ou par tout système manuel ou mécanique capable de déposer une couche de grains d'émail, l'émail en grains dont la composition sera ajustée à la température de cuisson souhaitée en fonction de la nature de l'objet à revêtir et de toutes façons à une température inférieure de 40 à 150° C à celle de la cuisson de l'or.

Les exemples 12 à 14 suivants sont donnés pour illustrer la façon dont l'invention peut être mise en œuvre dans la pratique mais ils ne doivent en aucun cas être utilisés comme limitant le cadre de l'invention.

### Exemple 12

Base: bouteilles de parfum
Or brillant du commerce pour verre
Application: décoration au pistolet pulvérisateur
cuisson: four à arches pour décors, température 600° C
Enduction: exemple 2
Granulométrie: exemple 5
Email 15% SiO₂ — 85% PbO
Cuisson: four à arches pour décors, température 560° C

### Exemple 13

Base: carreau céramique de 20 × 20 cm
Or brillant du commerce pour porcelaine
Application à l'écran de soie
Cuisson: four à rouleaux cuisson décor 820° C
Enduction par sérigraphie exemple 2
Granulométrie: exemple 4
Email exemple 8
Cuisson: four à rouleaux à 780° C

## Exemple 14

Base: mosaïque vitrifiée de 2,4 × 2,4 cm
Or brillant pour porcelaine
Application au rouleau
Cuisson: en four cloche à 800°C
Enduction exemple 1
Granulométrie: exemple 6
Email: exemple 11
Cuisson: en four cloche à 760°C

Les exemples 12, 13 et 14 peuvent être mis en œuvre de la même manière, mais en utilisant du platine à la place de l'or.

## Revendications

1. Procédé de revêtement d'or ou de platine sur des objets, en particulier des objets en céramique ou en verre, vitrifiés dans la masse ou émaillés, consistant à appliquer un revêtement d'or ou de platine sur une surface d'un objet, à sécher ce revêtement, à soumettre l'objet à une première cuisson à des températures comprises entre environ 500°C et 800°C selon la nature de l'objet, à étaler une couche d'accrochage sur la surface revêtue de l'objet, à effectuer sur cette surface un émaillage à sec en déposant sur la couche d'accrochage une couche d'émail, et à faire subir à l'objet une deuxième cuisson à des températures inférieures aux températures de première cuisson, caractérisé en ce que la couche d'émail est constituée de grains d'émail de granulométrie comprise entre 5 et 1000 µm de manière à obtenir après la deuxième cuisson un revêtement d'or ou de platine protégé présentant un relief sablé brillant.

2. Procédé selon la revendication 1, caractérisé en ce que la granulométrie des grains d'émail est comprise entre 10 et 315 µm.

3. Procédé selon l'une des revendications 1 et 2, caractérisé en ce que la couche d'émail présente un indice de réfraction supérieur à 1,6.

4. Procédé selon l'une des revendications 1 à 3, caractérisé en ce que la couche d'émail est constituée essentiellement d'un silicate de plomb simple ou complexe.

5. Procédé selon l'une des revendications 1 à 4, caractérisé en ce que la deuxième cuisson est effectuée à des températures inférieures de 40° à 150°C aux températures de première cuisson et pendant une durée comprise entre 40 minutes et 4 heures.

6. Procédé selon l'une des revendications 1 à 5 et appliqué à des objets en verre, caractérisé en ce qu'on effectue la première cuisson vers 500°C et la deuxième cuisson vers 460°C.

7. Procédé selon l'une des revendications 1 à 5, et appliqué à des objes en céramique, caractérisé en ce qu'on effectue la première cuisson vers 800°C et la deuxième cuisson vers 760°C.

8. Procédé selon l'une des revendications 1 à 7, caractérisé en ce que la température de la deuxième cuisson est supérieure de 10° à 20°C à la température de fusion de l'émail.

9. Procédé selon l'une des revendications 1 à 8, caractérisé en ce que l'on dispose la couche d'émail sur une partie de la surface revêtue d'or ou de platine pour obtenir une surface revêtue offrant partiellement un relief sablé brillant.

10. Objets obtenus par la mise en œuvre du procédé selon l'une des revendications 1 à 9.

## Patentansprüche

1. Verfahren zum Überziehen von Gegenständen mit Gold oder Platin, insbesondere zum Überziehen von Gegenständen aus Keramik oder Glas, in der Gesamtheit zu Glas gewordenen oder emaillierten Gegenständen, bei dem auf eine Oberfläche eines Gegenstands ein Überzug aus Gold oder aus Platin aufgebracht, der Überzug getrocknet, der Gegenstand einer ersten Aushärtung bei Temperaturen zwischen — je nach Beschaffenheit des Gegenstandes — 500°C und 800°C unterzogen, auf die beschichtete Oberfläche des Gegenstands eine Haftschicht aufgetragen, auf dieser Oberfläche eine Trockenemaillierung geschaffen wird, indem auf die Haftschicht eine Emaillierschicht aufgebracht wird, und der Gegenstand einer zweiten Aushärtung bei Temperaturen unterhalb der Temperaturen der ersten Aushärtung unterzogen wird, dadurch gekennzeichnet, daß die Emaillierschicht aus Emaillekörnern der Kornklassierung zwischen 5 und 1000 µm besteht, derart, daß nach der zweiten Aushärtung ein geschützter Gold- oder Platinüberzug erhalten wird, der ein glänzendes Sandrelief aufweist.

2. Verfahren nach Anspruch 1, dadurch gekennzeichnet, daß die Kornklassierung der Emaillekörner zwischen 10 und 315 µm liegt.

3. Verfahren nach einem der Ansprüche 1 und 2, dadurch gekennzeichnet, daß die Emailleschicht einen Bechungsindex von mehr als 1,6 aufweist.

4. Verfahren nach einem der Ansprüche 1 bis 3, dadurch gekennzeichnet, daß die Emailleschicht im wesentlichen aus einem einfachen oder komplexen Bleisilikat besteht.

5. Verfahren nach einem der Ansprüche 1 bis 4, dadurch gekennzeichnet, daß die zweite Aushärtung bei Temperaturen erfolgt, die um 40° bis 150°C unter den Temperaturen der ersten Aushärtung liegen, sowie während einer Dauer zwischen 40 Minuten und 4 Stunden.

6. Verfahren nach einem der Ansprüche 1 bis 5, angewandt bei Gegenständen aus Glas, dadurch gekennzeichnet, daß die erste Aushärtung gegen 500°C und die zweite Aushärtung gegen 460°C erfolgt.

7. Verfahren nach einem der Ansprüche 1 bis 5, angewandt bei Gegenständen aus Keramik, dadurch gekennzeichnet, daß die erste Aushärtung gegen 800°C und die zweite Aushärtung gegen 760°C erfolgt.

8. Verfahren nach einem der Ansprüche 1 bis 7, dadurch gekennzeichnet, daß die Temperatur der zweiten Aushärtung um 10° bis 20°C über der Schmelztemperatur der Emaille liegt.

9. Verfahren nach einem der Ansprüche 1 bis 8, dadurch gekennzeichnet, daß die Emailleschicht auf einem Teil der mit Gold oder Platin überzogenen Oberfläche aufgebracht wird, um eine Überzugsfläche zu erhalten, die teilweise ein glänzendes Sandrelief darstellt.

10. Gegenstände, erhalten durch Durchführung des Verfahrens nach einem der Ansprüche 1 bis 9.

## Claims

1. A process for coating articles with gold or platinum, particularly ceramic or glass articles, vitrified in bulk or enamelled, consisting in applying a coating of gold or platinum onto the surface of an article, drying this coating, subjecting the article to a first baking at temperatures of from about 500°C to 800°C depending on the type of article, spreading a base layer on the coated surface of the article, dryenamelling this surface by depositing a layer of enamel on the base layer, and subjecting the article to a second baking at temperatures below the temperatures of the first baking, characterised in that the enamel layer is composed of enamel grains with a granulometry of from 5 to 1000 µm, in such a manner as to abtain, after the second baking, a protected gold or platinum coating having a brilliant sandy raised effect.

2. A process according to claim 1, characterised in that the granulometry of the enamel grains is from 10 to 315 µm.

3. A process according to one of claims 1 and 2, characterised in that the enamel layer has a refractive index greater than 1.6.

4. A process according to one of claims 1 to 3, characterised in that the enamel layer essentially consists of a simple or complex lead silicate.

5. A process according to one of claims 1 to 4, characterised in that the second baking is carried out at temperatures from 40 to 150°C lower than the temperatures of the first baking and for a duration of from 40 minutes to 4 hours.

6. A process according to one of claims 1 to 5 and applied to glass articles, characterised in that the first baking is carried out at about 500°C and the second baking at about 460°C.

7. A process according to one of claims 1 to 5, and applied to cermaic articles, characterised in that the first baking is carried out at about 800°C and the second baking at about 760°C.

8. A process according to one of claims 1 to 7, characterised in that the temperature of the second baking is from 10 to 20°C higher than the melting point of the enamel.

9. A process according to one of claims 1 to 8, characterised in that the enamel layer is deposited on part of the surface coated with gold or platinum to obtain a coated surface partially having a brilliant sandy raised effect.

10. Articles obtained by the process according to one of claims 1 to 9.

FIG.1

FIG.2

FIG.3

FIG.4

FIG.5

FIG.6

9

0 098 220

FIG_7

FIG_8